# EUROPÄISCHE PATENTSCHRIFT

(11) **EP 3 620 819 B1**
(45) Veröffentlichungstag und Bekanntmachung des Hinweises auf die Patenterteilung: **30.08.2023**
(21) Anmeldenummer: 19186908.0
(22) Anmeldetag: 18.07.2019
(51) Int. Cl.: G01S 13/87, G01S 13/933

(54) **KOORDINIERTES DETEKTIEREN VON OBJEKTEN IN EINEM LUFTRAUM**
COORDINATED DETECTION OF OBJECTS IN AN AIRSPACE
DÉTECTION COORDONNÉE DES OBJETS DANS UN ESPACE AÉRIEN

(30) Priorität: 07.09.2018 DE 102018121821
(43) Veröffentlichungstag der Anmeldung: 11.03.2020
(73) Patentinhaber: Airbus Defence and Space GmbH, 82024 Taufkirchen (DE)
(72) Erfinder: Katsilieris, Dr. Fotios, 82024 Taufkirchen (DE); Krach, Dr. Bernhard, 82024 Taufkirchen (DE)
(74) Vertreter: LKGLOBAL Lorenz & Kopf Patentanwalt Attorney at Law PartG mbB

(56) Entgegenhaltungen:
- EP-A1- 3 584 600
- US-A1- 2006 114 324
- US-B1- 6 690 318
- FINN A ET AL: "Design Challenges for an Autonomous Cooperative of UAVs", INFORMATION, DECISION AND CONTROL, 2007. IDC '07, IEEE, PI, 1. Februar 2007 (2007-02-01), Seiten 160-169, XP031181130, DOI: 10.1109/IDC.2007.374543 ISBN: 978-1-4244-0901-3
- GUSRIALDI A ET AL: "Coverage control for mobile networks with limited-range anisotropic sensors", DECISION AND CONTROL, 2008. CDC 2008. 47TH IEEE CONFERENCE ON, IEEE, PISCATAWAY, NJ, USA, 9. Dezember 2008 (2008-12-09), Seiten 4263-4268, XP031401599, ISBN: 978-1-4244-3123-6

## Beschreibung

### GEBIET DER ERFINDUNG

Die vorliegende Erfindung befasst sich mit einem Verfahren zum Durchsuchen eines Suchbereichs, einem Flugkörper und einer Flugkörperformation.

### HINTERGRUND DER ERFINDUNG

Moderne Flugzeuge sind meist mit einer großen Anzahl an Sensoren ausgestattet, welche eine wichtige Rolle für das Flugzeug und/oder für den Piloten haben, um eine Mission mit bestmöglichem Ergebnis auszuführen.

Ein solcher Sensor ist beispielsweise ein Radar, welcher auch einer der meistverwendete Sensoren zur Lagebilderkennung ist. Mit einem Radar können Objekte oder Ziele bei großen Reichweiten erkannt oder detektiert werden. Die Eigenschaften eines Radars werden vom Wetter weniger beeinträchtigt, wie beispielsweise ein Kamerasensor. Ziel-Erkennung/Verfolgung mittels Radar ist beispielsweise auch dann noch möglich, wenn dies aufgrund von IMC (Instrument Metereological Conditions, deutsch Instrumentenflugbedingungen) mit bildgebenden elektro-optischen bzw. Infrarotsensoren nicht mehr möglich ist.

Flugzeuge wurden oft mit mechanisch schwenkenden Radarantennen ausgestattet. Dies hatte zur Folge, dass das Durchsuchen eines Luftraums mit ein paar Parametern ausgeführt werden konnte, die optimierbar waren. Üblicherweise definiert der Pilot den Luftraum, der durchsucht werden soll, meist als Winkelangabe und Halbbreite, und die Reichweite innerhalb derer ein Ziel definierter Größe erkannt werden soll. Aufgrund dieser Informationen optimiert das Radar die dann ausgesandte Wellenform. Bei einer solchen Vorgehensweise ist das Suchmuster und das Abtasten des Luftraums weitestgehend festgelegt und hängt nur von der Größe des Luftraums ab, der durchsucht wird.

Die US 2006 / 0 114 324 A1 beschreibt ein Überwachungsverfahren mit den folgenden Schritten: Senden von Informationsanforderungen an eine oder mehrere einer Vielzahl von unbemannten Flugplattformen, von denen jede einen oder mehrere Sensoren zum Sammeln von Informationen trägt; Koordinieren der Verarbeitung der Anforderungen unter der Vielzahl von Flugplattformen; und Übertragen von Antworten auf die Anforderungen an einen oder mehrere Anforderer. Es wird ferner ein Überwachungssystem beschrieben, das zur Durchführung des Verfahrens verwendet werden kann.

### ZUSAMMENFASSUNG DER ERFINDUNG

Eine Aufgabe der vorliegenden Erfindung besteht nun darin, das Durchsuchen eines Luftraums so zu verbessern, dass eine schnelle und effiziente Lagebilderkennung, beispielsweise für einen Piloten, gewährleistet werden kann.

Diese Aufgabe wird durch ein Verfahren mit den Merkmalen des Anspruchs 1 gelöst.
Gemäß der Erfindung ist ein Verfahren zum Durchsuchen eines Suchbereichs angegeben, wobei jeweils wenigstens ein Radar in wenigstens zwei Flugkörpern angeordnet ist. Das Verfahren umfasst: a) Bestimmen einer vordefinierten Gesamtsuchzeit zum Durchsuchen des Suchbereichs, b) Aufteilen des Suchbereichs in wenigstens zwei Teilsuchbereiche, c) Durchsuchen der wenigstens zwei Teilsuchbereiche vom jeweiligen Radar der wenigstens zwei Flugkörper, wobei die wenigstens zwei Flugkörper das Durchsuchen kooperativ ausführen, wobei die Teilsuchbereiche so gewählt sind, dass eine Detektionswahrscheinlichkeit des Suchbereichs maximiert ist. Die Detektionswahrscheinlichkeit ist für die wenigstens zwei Teilsuchbereiche gleich. Die Teilsuchbereiche weisen im Wesentlichen keinen Überlapp auf. Das Aufteilen des Suchbereichs wird für verschiedene Kombinationen von jeweils zwei Teilsuchbereichen durchlaufen und die Detektionswahrscheinlichkeit wird beim Durchsuchen des Suchbereichs ermittelt. Für jede Kombination wird die Detektionswahrscheinlichkeit der zwei Teilsuchbereiche ermittelt. Die Kombination der zwei Teilsuchbereiche wird für eine maximale Detektionswahrscheinlichkeit für das dann folgende Durchsuchen des Suchbereichs verwendet.

Ein Radar ist dazu eingerichtet verschiedene Objekte zu detektieren. Insbesondere kann das Radar das Durchsuchen eines Suchbereichs, welcher meist ein (Luft)Volumen ist, durchführen.

Gemäß der Erfindung wird ein Suchbereich in einer vorgegebenen Gesamtsuchzeit so durchsucht werden, dass die Detektionswahrscheinlichkeit für Objekte oder Ziele im Suchbereich maximal ist. Die Erfindung ermöglicht eine verbesserte Detektionswahrscheinlichkeit zum Auffinden von Zielen oder Objekten in einem dreidimensionalen Suchbereich innerhalb einer vorgegebenen Zeit. Es bleiben möglichst wenige oder keine Ziele oder Objekte undetektiert. Das Durchsuchen des Suchbereichs ist von höchster Bedeutung beispielsweise für die Lagebilderkennung durch einen Piloten. Undetektierte Objekte oder Ziele können nicht nur ein Problem werden wegen einer potentiellen Feindseligkeit während einer Mission, sondern auch wegen einer möglichen Kollisionsgefahr im Luftraum. Lagebilderkennung bezeichnet die Bestimmung des Ortes bzw. der Geschwindigkeit von anderen Zielen oder Objekten.

Radarsensoren, in diesem Text auch kurz Radar genannt, sind Sensoren welche der Flugkörper ggf. nebst weiteren Sensoren wie einer Kamera etc. aufweist. Ein solches Radar, kann mit aktiver elektronischer Ansteuerung der Einzelelemente des Radars ausgestattet sein (in Englisch: active electronically scanned array antennas (AESA)). Ein solches Radar kann den Radarstrahl nahezu instantan für verschiedene Raumwinkel steuern (ein Raumwinkel wird als Horizontal- und Vertikalwinkel angegeben, auch Azimut und Elevation genannt), so dass adaptives Strahlausrichten möglich ist.

Ein Flugkörper umfasst jegliche Art von fliegendem Gerät mit jeglicher Art von Antrieb. Beispielsweise, Flugzeuge, unbemannte Flugzeuge, in Englisch UAV ("unmanned aerial vehicle"), Drohnen, Lenkflugkörper, Raketen oder Helikopter.

Der Suchaufwand ein Objekt oder Ziel im Suchbereich von zwei oder mehreren Flugkörpern zu detektieren, wird kooperativ durchgeführt. Das heißt, dass ein koordiniertes Durchsuchen des Suchbereichs stattfindet.

Der Suchbereich ist ein (Luft)Volumen das vom wenigstens einem Radar des jeweiligen Flugkörpers erfasst werden kann. Der Suchbereich kann anhand von Horizontal-, Vertikalwinkel angegeben werden. Es ist auch möglich den Suchbereich anhand von dreidimensionalen Koordinaten anzugeben.

Oft befinden sich die Flugkörper in einer Flugformation im durchflogenen Luftraum. Der Suchbereich wird sich beispielsweise in der Umgebung von beiden Flugkörpern befinden. Bevorzugt wird sich der Suchbereich in Flugrichtung gesehen vor den Flugkörpern befinden.

Der zu durchsuchende Bereich im Luftraum, also der Suchbereich für die Flugkörper, wird in wenigstens zwei Teilsuchbereiche aufgeteilt. Die Anzahl der Teilsuchbereiche entspricht in manchen Beispielen der Erfindung der Anzahl der Flugkörper. Das Durchsuchen der wenigstens zwei Teilsuchbereiche erfolgt vom jeweiligen Radar des Flugkörpers, wobei jeweils ein Flugkörper wenigstens einen Teilsuchbereich durchsucht.

Das Durchsuchen der Teilsuchbereiche bzw. des Suchbereichs ist ein kooperatives Durchsuchen. Der Suchaufwand wird so verteilt, dass gleiche Bereiche des Suchbereichs nicht öfter durchsucht werden müssen. Bei zwei Flugkörpern mit jeweils einem Radar wird der Suchbereich beispielsweise in zwei Teilsuchbereiche aufgeteilt. Beide Flugkörper untersuchen zeitgleich oder im Wesentlichen zeitgleich ihren jeweiligen Teilsuchbereich. Das Verfahren wird, in manchen Beispielen, von sich in der Luft befindenden wenigstens zwei Flugkörpern durchgeführt.

Die Teilsuchbereiche sind so gewählt, das eine Detektionswahrscheinlichkeit maximiert ist. Damit ist gewährleistet, dass die beste Aufteilung des Suchbereichs gefunden wird und dass ein mehrfaches Durchsuchen des gleichen Bereichs entfällt. Der Suchbereich wird in der vorgegebenen Gesamtsuchzeit durchsucht. Beispielsweise kann die Detektionswahrscheinlichkeit für verschiedene Aufteilungen des Suchbereichs in Teilsuchbereiche bei vorgegebener Gesamtsuchzeit maximiert werden. Für eine bestimmte Aufteilung des Suchbereichs in Teilsuchbereiche ist die Detektionswahrscheinlichkeit maximal.

Mit dem erfindungsgemäßen Verfahren kann vermieden werden, dass sich nach dem Durchsuchen undektierte Ziele oder Objekte im Suchbereich befinden, welche beispielsweise auftreten, wenn der Suchbereich in einer naiven Weise, beispielsweise zu gleichen Teilen, aufgeteilt wird. Dies gilt insbesondere, wenn sich der Suchbereich bei beliebigen Horizontal- und Vertikalwinkeln im Luftraum erstreckt.

In manchen Beispielen des Verfahrens ist die Gesamtsuchzeit die kooperative Gesamtsuchzeit, die von den wenigstens zwei Flugkörpern benötigt wird um den Suchbereich zu durchsuchen. Die Suchzeit ist die Zeit, die der Radarstrahl benötigt um den Teilsuchbereich auszuleuchten und das Echo zu empfangen. In manchen Beispielen wird auch die Zeit mitberücksichtigt werden, welche benötigt wird um das empfangene Signal (Echo) zu bearbeiten um Objekte oder Ziele zu entdecken.

Gemäß einem Beispiel wird die Detektionswahrscheinlichkeit abhängig von einem Objekt von vorgegebener Größe bei vorgegebener Entfernung maximiert. Die Größe und/oder die Entfernung ist in manchen Beispielen vorbestimmt. Dies ermöglicht eine maximale Detektionswahrscheinlichkeit für verschiedene Objekte bei verschiedenen Entfernungen.

Gemäß der Erfindung ist die Detektionswahrscheinlichkeit für die wenigstens zwei Teilsuchbereiche gleich. Eine optimale Aufteilung der Teilsuchbereiche ergibt sich bei gleicher Detektionswahrscheinlichkeit für die wenigstens zwei Teilsuchbereiche. Die Aufteilung der Teilsuchbereiche wird so gewählt, dass die Detektionswahrscheinlichkeit des Suchbereichs maximiert ist. Die Teilsuchbereiche sind dabei voneinander verschieden, beispielweise sind die Teilsuchbereiche räumlich voneinander unterschiedlich. Beispielsweise ist die Größe der Teilsuchbereiche voneinander verschieden. Wird die Detektionswahrscheinlichkeit in einem Teilbereich erhöht, sinkt gleichzeitig die Detektionswahrscheinlichkeit in dem wenigstens einen anderen Teilsuchbereich.

Gemäß der Erfindung ist die Gesamtsuchzeit vordefiniert. Beispielsweise kann der Pilot die Gesamtsuchzeit vorgeben. Gegebenenfalls kann die Gesamtsuchzeit geändert oder an die jeweilige Lagebilderkennung angepasst werden.

Gemäß der Erfindung weisen die Teilsuchbereiche im Wesentlichen keinen Überlapp auf. In manchen Beispielen weisen die Teilsuchbereiche keinen Überlapp auf. Damit wird die Koordinierung des Durchsuchens einfacher und der Kommunikationsbedarf zwischen den Flugkörpern ist niedrig. Es gibt Beispiele, in denen die Teilsuchbereiche minimal überlappen. Durch einen minimalen oder überhaupt keinen Überlapp wird mehrmaliges Durchsuchen eines (Teil)Bereichs vermieden und der Suchaufwand zum Durchsuchen eines Suchbereichs kann geringgehalten werden. Auch werden Lücken im Suchbereich vermieden bei gleichzeitig maximaler Detektionswahrscheinlichkeit für Ziele oder Objekte im Suchbereich.

Gemäß einem Beispiel ist der Suchbereich vorgebbar oder veränderbar. Beispielsweise kann der Pilot den Suchbereich vorgeben durch einstellen eines Horizontal- bzw. Vertikalwinkels und der dazugehörigen (Halb)Breite (auch als (Halb)Breite in Azimut und Elevation bezeichnet). Gegebenenfalls kann der Suchbereich an die jeweilige Lagebilderkennung angepasst werden. In manchen Beispielen ist der Suchbereich vordefiniert.

Gemäß einem Beispiel ändert sich das Aufteilen des Suchbereichs in Teilsuchbereiche entsprechend der Bewegung und/oder der Trajektorie der wenigstens zwei Flugkörper.

Gemäß einem Beispiel wird das Aufteilen des Suchbereichs in Teilsuchbereiche entsprechend der Bewegung und/oder der Trajektorie der wenigstens zwei Flugkörper fortlaufend angepasst. Der Suchbereich ist beispielsweise mittels dreidimensionalen Koordinaten vorgegeben. Die Flugkörper bewegen sich im Suchbereich, so dass sich der Horizontal- und Vertikalwinkel (Azimut- und Elevationswinkel) und deren Winkelbreiten ändern.

Gemäß einem Beispiel wird ein Teilsuchbereich gemäß eines Horizontalwinkels, eines Vertikalwinkels und dazugehörigen Winkelbreiten, oder gemäß dreidimensionaler Koordinaten bestimmt. Auch können alle Teilsuchereiche anhand von Horizontalwinkel, Vertikalwinkel bestimmt werden. In manchen Beispielen ist die Bestimmung des einen oder der mehreren Teilsuchbereiche mittels dreidimensionalen Koordinaten möglich, beispielsweise werden die Eckpunkte oder die Flächen des Teilsuchbereichs angegeben.

Gemäß einem Beispiel weist einer der wenigstens zwei Flugkörper den zu durchsuchenden Teilsuchbereich dem wenigstens einen anderen Flugkörper zu. Damit kann eine zentrale Steuerung des Verfahrens geschaffen werden (zentralisiertes Verfahren). Die Zuweisung kann von jedem der Flugkörper ausgeführt werden. In manchen Beispielen ist einer der Flugkörper dazu ausgewiesen. Durch eine zentrale Steuerung kann der Suchaufwand optimiert werden.

Gemäß einem Beispiel legen die wenigstens zwei Flugkörper unabhängig voneinander jeweils den Teilsuchbereich fest, der vom Radar des Flugkörpers durchsucht werden soll. Durch das unabhängige Zuweisen des zu durchsuchenden Bereichs durch den jeweiligen Flugkörper wird eine dezentrale Steuerung geschaffen (dezentralisiertes Verfahren). Der zu durchsuchende Bereich, den der einzelne Flugkörper sich selber zuweist kann mit dem Teilbereich identisch sein, wenn der Suchbereich von einem Flugkörper anhand einer zentralen Steuerung in verschiedene Teilsuchbereiche ausgeführt wird.

Gemäß einem Beispiel ist ein vollständiges Durchsuchen des Suchbereichs gewährleistet. Mit anderen Worten, das Durchsuchen des Suchbereichs wird in der Gesamtsuchzeit abgeschlossen mit einer maximalen Detektionswahrscheinlichkeit.

Gemäß einem Aspekt der Erfindung ist ein Flugkörper vorgesehen, der wenigstens ein Radar und eine Prozesseinheit umfasst. Die Prozesseinheit ist dazu eingerichtet, das erfindungsgemäße Verfahren durchzuführen.

Gemäß einem Aspekt der Erfindung ist eine Flugkörperformation vorgesehen, welche wenigstens zwei Flugkörper umfasst, wobei die Flugkörperformation dazu eingerichtet ist, einen Suchbereich in einem Luftraum zu erfassen.

Gemäß einem Aspekt der Erfindung ist das koordinierte Durchsuchen eines Suchbereichs mit wenigstens zwei Flugkörpern, in welchen jeweils wenigstens ein Radar angeordnet ist, von großem Nutzen. Insbesondere ergibt sich durch das Verfahren eine Zeitersparnis beim Durchsuchen eines 3-dimensionalen Suchbereichs. Wenn der Suchbereich bei beliebig vorgegebenen Azimut- und Elevationswinkeln (Horizontal- und Vertikalwinkel) und den dazugehörigen Winkelbreiten liegt, dann führt eine einfache Aufteilung des Suchbereichs wie im Stand der Technik, beispielsweise ein Halbieren des Suchbereichs, zu signifikanten Zeitverzögerungen in der Gesamtsuchzeit. Derartige Zeitverzögerungen sind beim erfindungsgemäßen Verfahren nahezu ausgeschlossen. Die Teilsuchbereiche überlappen nicht (minimale Überlappung der Teilsuchbereiche, beispielsweise eine gemeinsame Grenze der Teilsuchbereiche können in manchen Beispielen vorhanden sein). Das Verfahren teilt den Suchbereich in die bestmöglichen Teilbereiche auf, so dass die Gesamtsuchzeit, welche zum kooperativen Durchsuchen des Suchbereichs benötigt wird, um eine gewünschte Detektionswahrscheinlichkeit zu gewährleisten, minimal ist. Mit anderen Worten, die Zeit die benötigt wird um einen Suchbereich zu durchsuchen, wird minimiert, wobei eine minimale Detektionswahrscheinlichkeit für Ziele oder Objekte vorbestimmter Größe bei einer vorbestimmten Entfernung gewährleistet wird. Eine Zeitersparnis zum Durchsuchen eines dreidimensionalen Volumens, welches vom Piloten vorgegeben werden kann, ist das Ergebnis. Dies führt insbesondere bei einem beliebig vorgegebenen Suchbereich, zu einem effektiveren und vor allem deutlich schnelleren Durchsuchen.

Es sei darauf hingewiesen, dass die Merkmale der Ausführungsbeispiele des Verfahrens auch für Ausführungsformen des Flugkörpers sowie der Flugkörperformation gelten und umgekehrt. Außerdem können auch diejenigen Merkmale frei miteinander kombiniert werden, bei denen dies nicht explizit erwähnt ist.

Diese und weitere Aspekte der Erfindung werden unter Bezugnahme und mit Verweis auf die folgenden Ausführungen ersichtlich.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: zeigt skizzenhaft zwei Flugkörper und einen Suchbereich;
- Fig. 2.: zeigt beispielhaft einen zu durchsuchenden Suchbereich in einem Koordinatensystem;
- Fig. 3: zeigt beispielhaft einen zu durchsuchenden Suchbereich in einem Koordinatensystem;
- Fig. 4: zeigt die Aufteilung des Suchbereichs S1 aus Figur 2 in jeweils zwei Teilsuchbereiche TS1, TS2;
- Fig. 5: zeigt die Aufteilung des Suchbereichs S2 aus Figuren 3 in jeweils zwei Teilsuchbereiche TS1, TS2;
- Fig. 6: zeigt ein Beispiel nach dem Stand der Technik.

### DETAILLIERTE BESCHREIBUNG VON AUSFÜHRUNGSFORMEN

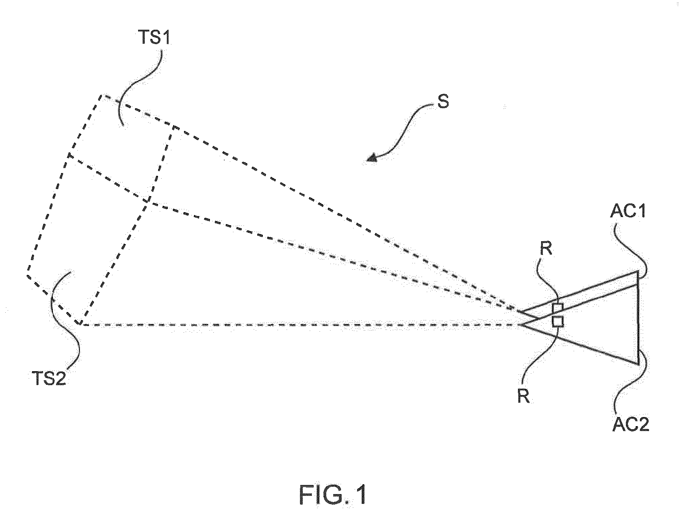

Figur 1 zeigt skizzenhaft zwei Flugkörper AC1, AC2 und einen Suchbereich S. Beide Flugkörper AC1, AC2 befinden sich in der Luft. Jeder Flugkörper AC1, AC2 weist ein Radar R auf. Der Suchbereich S ist ein dreidimensionaler Bereich der sich in der Umgebung der Flugkörper AC1, AC2 befindet. Die Flugkörper AC1, AC2 fliegen in manchen Ausführungsbeispielen als Flugformation.

Der Suchbereich S teilt sich auf in zwei Teilsuchbereiche TS1, TS2 die vom Radar R des jeweiligen Flugkörpers AC1, AC2 durchsucht werden. Die Teilsuchbereiche TS1, TS2 haben keinen Überlapp. Das Durchsuchen der Teilbereiche TS1, TS2 wird kooperativ ausgeführt. Wie in den folgenden Figuren beschrieben, umfassen die Teilsuchbereiche TS1, TS2 den gesamten Suchbereich S.

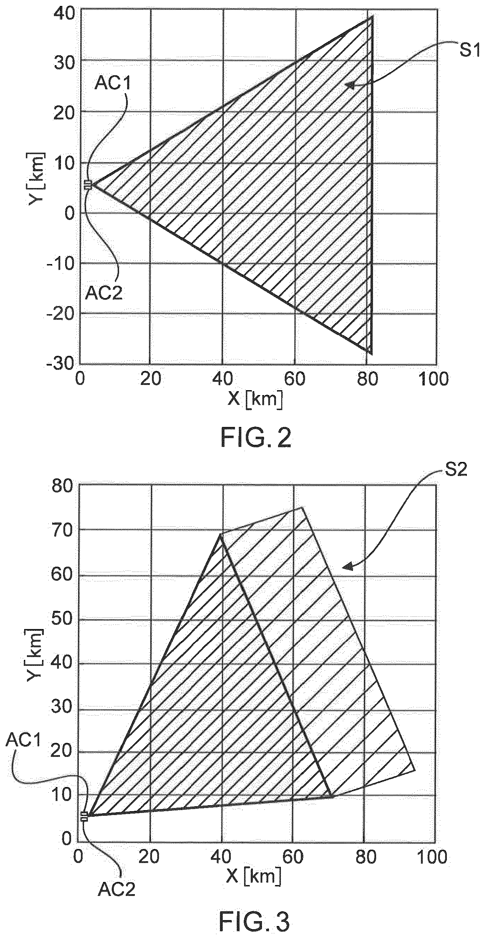

Figuren 2 und 3 zeigen jeweils einen Suchbereich S1 oder S2. Die Flugkörper AC1, AC2 fliegen in einer Höhe von 10 km und sind auf der gezeigten Y-Achse 500 m voneinander entfernt. Aus Gründen der Darstellbarkeit sind die Flugkörper AC1, AC2 kaum voneinander zu unterscheiden. Die numerischen Angaben sind beispielhaft. Im Folgenden wird der Suchbereich bzw. die Teilsuchbereiche mittels Azimutwinkel θ (Horizontalwinkel) und Elevationswinkel ϕ (Vertikalwinkel) und Winkelhalbbreite θ-S1, θ-S2 für den Azimutwinkel und ϕ-S1, ϕ-S2 für den Elevationswinkel angegeben.

In Figur 2, soll der Suchbereich S1 vom jeweiligen Radar R der Flugkörper AC1, AC2 durchsucht werden, welcher zentriert ist bei Azimutwinkel θ = 0° und Elevationswinkel ϕ = 0°, also direkt vor den Flugkörpern AC1, AC2, mit einer Winkelbreite 0-S1 von -25° bis 25° für den Azimutwinkel und ϕ-S1 von - 25° bis 25° für den Elevationswinkel. Ein solcher Suchbereich ist üblich zur Vermeidung von Kollisionen mit anderen Flugkörpern.

In Figur 3, soll der Suchbereich S2 vom jeweiligen Radar R der Flugkörper AC1, AC2 durchsucht werden, welcher zentriert ist bei Azimutwinkel θ = 30° und Elevationswinkel ϕ = 20°, mit einer Winkelbreite θ-S1 von 5° bis 55° für den Azimutwinkel und ϕ-S1 von - 5° bis 45° für den Elevationswinkel. Ein solcher Suchbereich stellt eine Situation dar, in der die Piloten informiert wurden, dass sich möglicherweise bedrohliche Ziele oder Objekte nähern. Bei unbemannten Flugkörpern erhält ein entsprechendes Gerät oder System der Flugkörper die Information. In anderen Ausführungsformen ist es möglich, dass eine Bodenstation die Information erhält.

In beiden Figuren 2 und 3 soll der Suchbereich S1, S2 innerhalb einer Gesamtsuchzeit durchsucht werden, bei gegebenem Radarquerschnitt σ (in Englisch: radar cross section) und Reichweite, wobei eine Detektionswahrscheinlichkeit PD maximiert ist. Gemäß dem Verfahren wird der Suchbereich S1 oder S2 in zwei Teilsuchbereiche aufgeteilt, die vom jeweiligen Radar R der zwei Flugkörper AC1, AC2 kooperativ durchsucht werden. Die Teilsuchbereiche weisen dabei keinen Überlapp auf. Jeder Teilsuchbereich weist eine Detektionswahrscheinlichkeit auf.

In diesem Ausführungsbeispiel, soll also eine Aufteilung des Suchbereichs S1, S2 gefunden werden, so dass die Detektionswahrscheinlichkeit PD_TS1, PD_TS2 für die zwei Teilsuchbereiche TS1, TS2 zum Durchsuchen des Suchbereichs S1, S2 maximiert ist. Optimalerweise ist die Detektionswahrscheinlichkeit PD_TS1, PD_TS2 für die zwei Teilsuchbereiche TS1, TS2 gleich. Dabei ist die Gesamtsuchzeit zum Durchsuchen des Suchbereichs S1, S2 vorbestimmt und kann vorgegeben oder vordefiniert sein.

Das Verfahren der Aufteilung des Suchbereichs S1 oder S2 wird für verschiedene Kombinationen von jeweils zwei Teilsuchbereichen TS1, TS2 durchlaufen und die Detektionswahrscheinlichkeit PD beim Durchsuchen des Suchbereichs S1 oder S2 wird ermittelt. Um die beste Aufteilung des Suchbereichs S1, S2 zu erhalten wird in diesem Beispiel jeweils der Azimutwinkelbereich oder der Elevationswinkelbereich verändert. Jeder Flugkörper AC1, AC2 durchsucht den gesamten Elevationsbereich aber nur einen Teil des Azimutbereichs, oder den gesamten Azimutbereich aber nur einen Teil des Elevationsbereichs. In anderen Beispielen kann auch eine andere Kombination der Aufteilung zugrunde gelegt werden.

Für jede Kombination wird die Detektionswahrscheinlichkeit PD, PD_TS1, PD_TS2 der zwei Teilsuchbereiche TS1, TS2 ermittelt. Die Kombination der zwei Teilsuchbereiche TS1, TS2 für eine maximale Detektionswahrscheinlichkeit PD wird für das dann folgende Durchsuchen des Suchbereichs S1 oder S2 verwendet. In diesem Ausführungsbeispiel ist die Detektionswahrscheinlichkeit PD_TS1, PD_TS2 für die zwei Teilsuchbereiche TS1, TS2 gleich.

In diesem Beispiel führt die gefundene geometrische Aufteilung gemäß eines Horizontalwinkels, Vertikalwinkels und einer Entfernung, die maximale Detektionswahrscheinlichkeit PD für ein Objekt oder Ziel, als auch die vorbestimmte Gesamtsuchzeit zu einem zuverlässigen Durchsuchen des Suchbereichs S1 oder S2 und damit zu einer zuverlässigen Lagebilderkennung. Beispielsweise kann eine drohende Kollisionsgefahr vermieden werden. Es ist auch gewährleistet, dass das Durchsuchen des Suchbereichs S1, S2 innerhalb der Gesamtsuchzeit vollständig abgeschlossen wird.

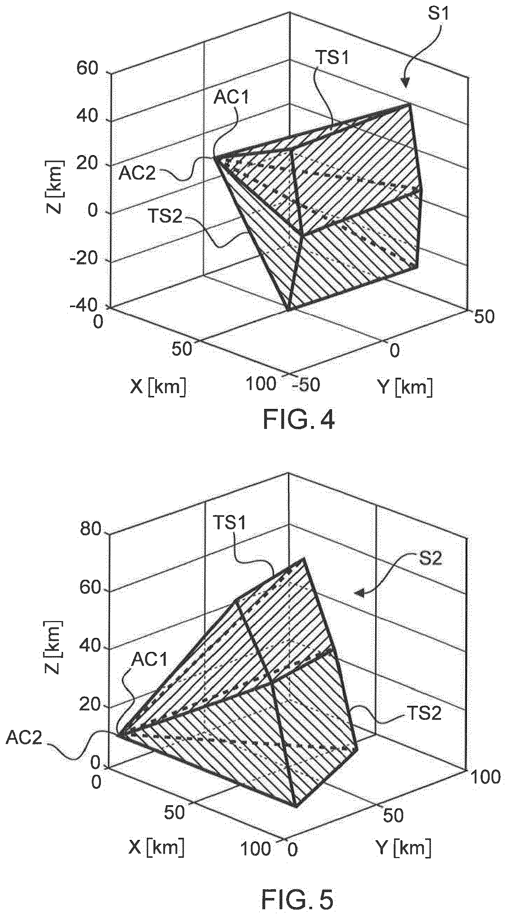

Figur 4 und 5 zeigen die Aufteilung des Suchbereichs S1, S2 aus den Figuren 2, 3 in jeweils die zwei Teilsuchbereiche TS1, TS2. Jeder Teilsuchbereich TS1, TS2 ist einem der Flugkörper AC1, AC2 zugeordnet und wird vom Radar R des jeweiligen Flugkörpers AC1, AC2 durchsucht.

In Figur 4 ist eine symmetrische Aufteilung in die Teilsuchbereiche TS1, TS2 zu sehen. Eine solche Aufteilung ist intuitiv und einfach. Das Aufteilungsverhältnis bezüglich der Elevation ist 25°/25° für die Teilsuchbereiche TS1, TS2. Der Suchbereich S1 ist wie in Figur 2 beschrieben.

In Figur 5 ist eine Aufteilung in die Teilsuchbereiche TS1, TS2 zu sehen. Das Aufteilungsverhältnis bezüglich der Elevation ist 27,8°/22,2° für die Teilsuchbereiche TS1, TS2. Der Suchbereich S2 ist wie in Figur 3 beschrieben.

Die Figuren zeigen, wenn ein Suchbereich symmetrisch um die Antennennormale des Radarsensors (vgl. Fig. 2) liegt, führt eine symmetrische Aufteilung der Teilsuchbereiche TS1, TS2 zu einer maximalen Detektionswahrscheinlichkeit PD für Ziele oder Objekte. Ist hingegen der Suchbereich nicht symmetrisch dann führt eine symmetrische Aufteilung zu einer Detektionswahrscheinlichkeit PD die kleiner als die maximale Detektionswahrscheinlichkeit PD ist. In einem weiteren Beispiel ändert sich das Aufteilen des Suchbereichs S1, S2 in die zwei Teilsuchbereiche TS1, TS2 mit der Bewegung bzw. der Trajektorie der Flugkörper. In manchen Beispielen wird die Aufteilung in die Teilsuchbereiche TS1, TS2 fortlaufend angepasst.

In manchen Ausführungsformen wird das Verfahren in einer entsprechenden Vorrichtung beispielsweise des Flugkörper AC1 durchgeführt. Dazu ist nur die Position des anderen Flugkörpers AC2 (vgl. auch Figur 1) nötig. Dieser weist dann den zu durchsuchenden Teilsuchbereich TS2 dem anderen Flugkörper AC2 zu. Es werden beispielsweise nur folgende Werte an den anderen Flugkörper AC2 übertragen: Azimut- und Elevation-Mittellinie und die Halbbreite des Teilsuchbereichs TS2 der dem anderen Flugkörper AC2 zugewiesen wird. Damit ist eine zentrale Steuerung des Verfahrens geschaffen.

Es ist jedoch auch möglich, dass die Flugkörper AC1, AC2 unabhängig voneinander jeweils den Teilsuchbereich TS1, TS2 festlegen, der vom Radar R des Flugkörpers AC1, AC2 durchsucht werden soll. Durch das unabhängige Zuweisen des zu durchsuchenden Teilsuchbereichs TS1, TS2 durch den jeweiligen Flugkörper AC1, AC2 wird eine dezentrale Steuerung geschaffen.

Die beschriebenen Flugkörper AC1, AC2 sind zum Durchführen des Verfahrens und zum Durchsuchen des Suchbereichs entsprechend ausgestattet. Beispielsweise weist ein solcher Flugkörper auch eine Prozesseinheit zum Durchführen des Verfahrens auf.

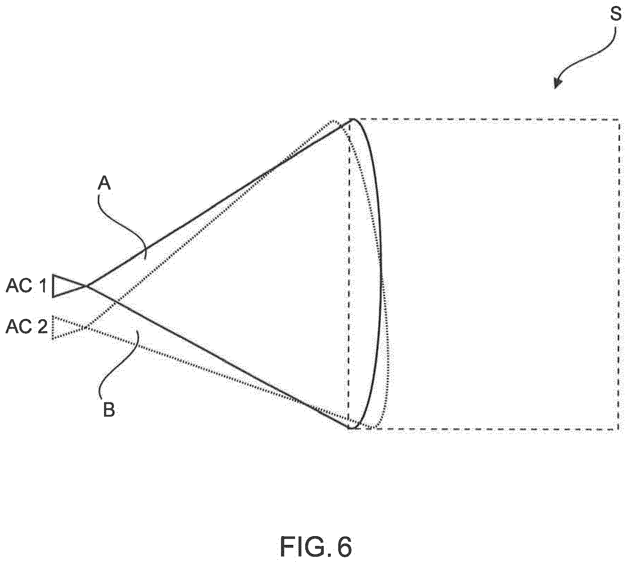

Figur 6 zeigt das Durchsuchen eines Bereichs S in einem Luftraum gemäß dem Stand der Technik. Die Suche wird nicht-kooperativ ausgeführt. Insbesondere werden die Bereiche A, B, die von dem jeweiligen Flugkörper AC1, AC2 durchsucht werden, so aufgeteilt, dass diese Bereiche A, B größtenteils überlappen, wie in Figur 6 gezeigt. Dies führt nicht zu einer maximalen Detektionswahrscheinlichkeit innerhalb einer vorgegebenen Gesamtsuchzeit für das Durchsuchen des Bereichs S und führt zu einer weniger zuverlässigen Lagebilderkennung.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt. Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Durchsuchen eines Suchbereichs (S), wobei jeweils wenigstens ein Radar (R) in wenigstens zwei Flugkörpern (AC1, AC2) angeordnet ist, umfassend:
a) Bestimmen einer vordefinierten Gesamtsuchzeit zum Durchsuchen des Suchbereichs (S),
b) Aufteilen des Suchbereichs (S) in wenigstens zwei Teilsuchbereiche (TS1, TS2),
c) Durchsuchen der wenigstens zwei Teilsuchbereiche (TS1, TS2) vom jeweiligen Radar (R) der wenigstens zwei Flugkörper (AC1, AC2), wobei die wenigstens zwei Flugkörper (AC1, AC2) das Durchsuchen kooperativ ausführen,
wobei die Teilsuchbereiche (TS1, TS2) so gewählt sind, dass eine Detektionswahrscheinlichkeit (PD) des Suchbereichs (S) maximiert ist;
wobei die Detektionswahrscheinlichkeit für die wenigstens zwei Teilsuchbereiche (TS1, TS2) gleich ist;
wobei die Teilsuchbereiche (TS1, TS2) im Wesentlichen keinen Überlapp aufweisen;
wobei das Aufteilen des Suchbereichs (S) für verschiedene Kombinationen von jeweils zwei Teilsuchbereichen (TS1, TS2) durchlaufen wird und die Detektionswahrscheinlichkeit (PD) beim Durchsuchen des Suchbereichs (S) ermittelt wird;
wobei für jede Kombination die Detektionswahrscheinlichkeit (PD) der zwei Teilsuchbereiche (TS1, TS2) ermittelt wird;
wobei die Kombination der zwei Teilsuchbereiche (TS1, TS2) für eine maximale Detektionswahrscheinlichkeit (PD) für das dann folgende Durchsuchen des Suchbereichs (S) verwendet wird.

2. Verfahren nach Anspruch 1, wobei die Detektionswahrscheinlichkeit abhängig von einem Objekt von vorgegebener Größe bei vorgegebener Entfernung maximiert wird.

3. Verfahren nach einem der vorherigen Ansprüche, wobei der Suchbereich (S) vorgebbar oder veränderbar ist.

4. Verfahren nach einem der vorherigen Ansprüche, wobei sich das Aufteilen des Suchbereichs (S) in Teilsuchbereiche (TS1, TS2) entsprechend der Bewegung und/oder der Trajektorie der wenigstens zwei Flugkörper (AC1, AC2) ändert.

5. Verfahren nach einem der vorherigen Ansprüche, wobei das Aufteilen des Suchbereichs (S) in Teilsuchbereiche (TS1, TS2) entsprechend der Bewegung und/oder der Trajektorie der wenigstens zwei Flugkörper (AC1, AC2) fortlaufend angepasst wird.

6. Verfahren nach einem der vorherigen Ansprüche, wobei ein Teilsuchbereich (TS1, TS2) gemäß eines Horizontalwinkels, eines Vertikalwinkels und dazugehörigen Winkelbreiten, oder gemäß dreidimensionaler Koordinaten bestimmt wird.

7. Verfahren nach einem der vorherigen Ansprüche, wobei einer der wenigstens zwei Flugkörper (AC1, AC2) den zu durchsuchenden Teilsuchbereich (TS1, TS2) dem wenigstens einen anderen Flugkörper zuweist.

8. Verfahren nach einem der vorherigen Ansprüche, wobei die wenigstens zwei Flugkörper (AC1, AC2) unabhängig voneinander jeweils den Teilsuchbereich (TS1, TS2) festlegen, der vom Radar (R) des Flugkörpers durchsucht werden soll.

9. Verfahren nach einem der vorherigen Ansprüche, wobei ein vollständiges Durchsuchen des Suchbereichs (S) gewährleistet ist.

## Claims

1. Method for searching a search area (S), wherein in each case at least one radar (R) is arranged in at least two missiles (AC1, AC2), comprising:
a) determining a total search time for searching the search area (S),
b) splitting the search area (S) into at least two search subareas (TS1, TS2),
c) searching the at least two search subareas (TS1, TS2) by means of the respective radar (R) of the at least two missiles (AC1, AC2), wherein the at least two missiles (AC1, AC2) carry out the searching cooperatively, wherein the search subareas (TS1, TS2) are chosen such that a detection probability (PD) of the search area (S) is maximized;
wherein the detection probability for the at least two search subareas (TS1, TS2) is the same;
wherein the search subareas (TS1, TS2) have substantially no overlap;
wherein the splitting of the search area (S) is performed for different combinations of in each case two search subareas (TS1, TS2) and the detection probability (PD) for searching the search area (S) is ascertained;
wherein, for each combination, the detection probability (PD) of the two search subareas (TS1, TS2) is ascertained;
wherein the combination of the two search subareas (TS1, TS2) for a maximum detection probability (PD) is used for the searching of the search area (S).

2. Method according to Claim 1, wherein the detection probability is maximized on the basis of an object of prescribed size at a prescribed distance.

3. Method according to one of the preceding claims, wherein the search area (S) is prescribable or alterable.

4. Method according to one of the preceding claims, wherein the splitting of the search area (S) into search subareas (TS1, TS2) changes according to the movement and/or the trajectory of the at least two missiles (AC1, AC2) .

5. Method according to one of the preceding claims, wherein the splitting of the search area (S) into search subareas (TS1, TS2) is continually adapted according to the movement and/or the trajectory of the at least two missiles (AC1, AC2).

6. Method according to one of the preceding claims, wherein a search subarea (TS1, TS2) is determined based on a horizontal angle, a vertical angle and associated angle widths, or based on three-dimensional coordinates.

7. Method according to one of the preceding claims, wherein one of the at least two missiles (AC1, AC2) assigns the search subarea (TS1, TS2) to be searched to the at least one other missile.

8. Method according to one of the preceding claims, wherein the at least two missiles (AC1, AC2) each independently of one another stipulate the search subarea (TS1, TS2) that is supposed to be searched by the radar (R) of the missile.

9. Method according to one of the preceding claims, wherein complete searching of the search area (S) is ensured.

## Revendications

1. Procédé de recherche d'une zone de recherche (S), au moins un radar (R) étant disposé dans au moins deux engins volants (AC1, AC2), ledit procédé comprenant les étapes suivantes :
a) déterminer un temps de recherche total prédéfini pour rechercher la zone de recherche (S),
b) diviser la zone de recherche (S) en au moins deux sous-zones de recherche (TS1, TS2),
c) rechercher les au moins deux sous-zones de recherche (TS1, TS2) à l'aide du radar respectif (R) des au moins deux engins volants (AC1, AC2), les au moins deux engins volants (AC1, AC2) effectuant la recherche de manière coopérative,
les sous-zones de recherche (TS1, TS2) étant choisies de façon à maximiser une probabilité de détection (PD) de la zone de recherche (S) ;
la probabilité de détection des au moins deux sous-zones de recherche (TS1, TS2) étant la même ;
les sous-zones de recherche (TS1, TS2) ne présentant sensiblement aucun chevauchement ;
la division de la zone de recherche (S) étant effectuée à chaque fois pour différentes combinaisons de deux sous-zones de recherche (TS1, TS2), et la probabilité de détection (PD) étant déterminée lors de la recherche de la zone de recherche (S) ;
la probabilité de détection (PD) des deux sous-zones de recherche (TS1, TS2) étant déterminée pour chaque combinaison ;
la combinaison des deux sous-zones de recherche (TS1, TS2) étant utilisée pour une probabilité de détection maximale (PD) de la recherche ultérieure de la zone de recherche (S).

2. Procédé selon la revendication 1, la probabilité de détection étant maximisée en fonction d'un objet de dimension spécifiée pour une distance spécifiée,

3. Procédé selon l'une des revendications précédentes, la zone de recherche (S) pouvant être spécifiée ou modifiée.

4. Procédé selon l'une des revendications précédentes, la division de la zone de recherche (S) en sous-zones de recherche (TS1, TS2) varie selon le mouvement et/ou la trajectoire des au moins deux engins volants (AC1, AC2).

5. Procédé selon l'une des revendications précédentes, la division de la zone de recherche (S) en sous-zones de recherche (TS1, TS2) étant adaptée en continu en fonction du mouvement et/ou de la trajectoire des au moins deux engins volants (AC1, AC2) .

6. Procédé selon l'une des revendications précédentes, une sous-zone de recherche (TS1, TS2) étant déterminée suivant un angle horizontal, un angle vertical et des largeurs angulaires associées, ou suivant des coordonnées tridimensionnelles.

7. Procédé selon l'une des revendications précédentes, l'un des au moins deux engins volants (AC1, AC2) attribuant la sous-zone de recherche (TS1, TS2) à rechercher audit au moins un engin volant.

8. Procédé selon l'une des revendications précédentes, les au moins deux engins volants (AC1, AC2) définissant indépendamment l'un de l'autre la sous-zone de recherche (TS1, TS2) à rechercher à l'aide du radar (R) de l'engin volant.

9. Procédé selon l'une des revendications précédentes, une recherche complète de la zone de recherche (S) étant garantie.
